# EUROPEAN PATENT SPECIFICATION

(11) **EP 0 619 533 B1**
(45) Date of publication and mention of the grant of the patent: **03.06.1998**
(21) Application number: 94302356.4
(22) Date of filing: 31.03.1994
(51) Int. Cl.: G03G 15/20

(54) **Fusing components containing grafted ceramer compositions**
Wärmefixierkomponenten enthaltend gepfropfte Ceramerzusammensetzungen
Composantes de fixage à chaleur contenant des compositions de ceramer greffé

(30) Priority: 08.04.1993 US 44860
(43) Date of publication of application: 12.10.1994
(73) Proprietor: XEROX CORPORATION, Rochester, New York 14644 (US)
(72) Inventor: Badesha, Santokh S., Pittsford, New York 14534 (US); Berko-Boateng, Victor, Penfield, New York 14526 (US); Fratangelo, Louis D., Fairport, New York 14450 (US); Henry, Arnold W., Pittsford, New York 14534 (US); Heeks, George J., Rochester, New York 14617 (US); Ferguson, Robert M., Penfield, New York 14625 (US); Pan, David H., Rochester, New York 14625 (US)
(74) Representative: Pike, Christopher Gerard

(56) References cited:
- US-A- 4 917 980
- US-A- 5 166 031
- US-A- 5 177 552
- US-A- 5 200 284

## Description

This invention relates generally to a fuser member, a method for fabricating the fuser member, and a method of fusing toner images in electrostatographic reproducing apparatus. In particular, the present invention relates to a fuser member which may preferably take the form of a fuser roll, pressure roll or release agent donor roll containing an overcoating of a grafted ceramer composition.

In a typical electrostatographic reproducing apparatus, a light image of an original to be copied is recorded in the form of an electrostatic latent image upon a photosensitive member and the latent image is subsequently rendered visible by the application of electroscopic thermoplastic resin particles which are commonly referred to as toner. The visible toner image is then in a loose powdered form and can be easily disturbed or destroyed. The toner image is usually fixed or fused upon a support which may be the photosensitive member itself or other support sheet such as plain paper.

The use of thermal energy for fixing toner images onto a support member is well known, and several approaches to thermal fusing of electroscopic toner images have been described in the prior art. These methods include providing the application of heat and pressure substantially concurrently by various means: a roll pair maintained in pressure contact; a belt member in pressure contact with a roll; and the like. Heat may be applied by heating one or both of the rolls, plate members or belt members. The fusing of the toner particles takes place when the proper combination of heat, pressure and contact time are provided. The balancing of these parameters to achieve the fusing of the toner particles is well known in the art, and they can be adjusted to suit particular machines or process conditions.

A recent development in fusing systems involves the use of fluoroelastomers as fuser members which have a surface with a metal containing filler including metal oxide. The polymeric release agents having functional groups interact with the metal containing filler in the fluoroelastomer surface. Such fusing systems, fusing members and release agents, are described in US-A-4,264,181, US-A-4,257,699 and US-A-4,272,179.

However, a significant problem of the fluoroelastomer/metal oxide material such as Viton/copper oxide is its relative instability against certain charge control additives which reduces the life of the fusing components, especially for fusing of colored toner. Thus, there is a need for a fusing component material which exhibits one or more of the following characteristics: superior toughness, excellent wear resistance, excellent release capability, and degradation resistance against charge control additives.

Various compositions for components of fuser members are known as illustrated by US-A-5,141,788, US-A-5,017,432, and Henry, "Fuser Roll Coatings," Xerox Disclosure Journal, Vol 4, No. 6, p. 821 (November/December 1979).

US-A-4,917,980 describes hole-transporting polysilylene ceramers and photoresponsive imaging members comprising such ceramers.

US-A-5,166,031 discloses a fuser member comprising a supporting substrate having an outer layer of a volume grafted elastomer which is a substantially uniform integral interpenetrating network of a hybrid composition of a fluoroelastomer and a polyorganosiloxane, said volume graft having been formed by dehydrofluorination of said fluoroelastomer by a nucleophilic dehydrofluorinating agent, followed by addition polymerization by the addition of an alkene or alkyne functionally terminated polyorganosiloxane and a polymerization initiator.

It is an object of the invention to provide a fuser member having an overcoating which exhibits one or more of the following characteristics: superior toughness, excellent wear resistance, excellent release capability, and degradation resistance against toner additives, for example, charge control agents.

According to the present invention, there is provided a fuser member comprising a supporting substrate and a layer comprising integral interpenetrating networks of haloelastomer, silica and polyorganosiloxane wherein the layer is preferably positioned as the outer layer of the fuser member.

Conventionally, the term ceramer generically refers to a hybrid material of organic and inorganic composition which typically has ceramic like properties. As used herein, the term grafted ceramer refers to a composition comprised of substantially uniform integral interpenetrating networks of haloelastomer, silica, and polyorganosiloxane, wherein both the structure and the composition of the haloelastomer, silica, and polyorganosiloxane are substantially uniform when viewed through different slices of the fuser member.

The phrase interpenetrating network refers to the intertwining of the haloelastomer, silica and polyorganosiloxane polymer strands for the grafted ceramer.

The invention also provides a process for preparing a fuser member comprising: forming on a substrate a layer comprising integral interpenetrating networks of haloelastomer, silica, and polyorganosiloxane, wherein the networks are formed by the steps comprising in any effective sequence dehydrohalogenating the haloelastomer with an amine coupler having one or more functional groups and coupling the amine coupler thereto, hydrolyzing a silane compound, coupling the amine coupler to the hydrolyzed silane compound, coupling a functionally terminated polyorganosiloxane to one or more of the amine coupler, the silica network, and the haloelastomer.

According to another aspect, the invention provides a composition comprising substantially uniform integral interpenetrating networks of haloelastomer, silica, and polyorganosiloxane.

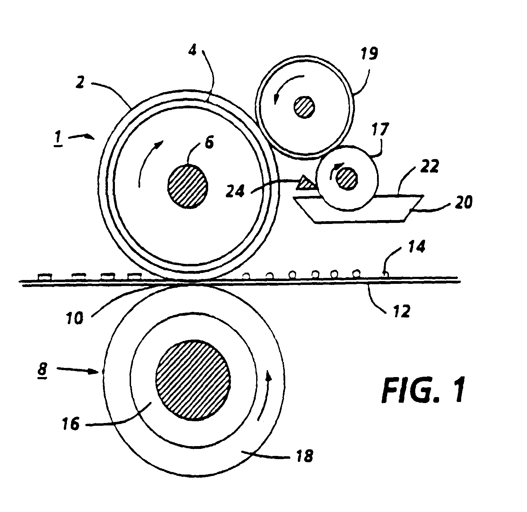

Other aspects of the present invention will become apparent as the following description proceeds and upon reference to Figure 1 which is a sectional view of a fuser system which may use the fuser member of the present invention.

A typical fuser member of the present invention is described in conjunction with a fuser assembly as shown in Figure 1 where the numeral 1 designates a fuser roll comprising elastomer layer 2 upon suitable base member 4 which is a hollow cylinder or core fabricated from any suitable metal such as aluminum, anodized aluminum, steel, nickel, copper, and the like, having a suitable heating element 6 disposed in the hollow portion thereof which is coextensive with the cylinder. Backup or pressure roll 8 cooperates with fuser roll 1 to form a nip or contact arc 10 through which a copy paper or other substrate 12 passes such that toner images 14 thereon contact elastomer surface 2 of fuser roll 1. As shown in Figure 1, the backup roll 8 has a rigid steel core 16 with an elastomer layer 18 thereon. Sump 20 contains polymeric release agent 22 which may be a solid or liquid at room temperature, but it is a fluid at operating temperatures.

In the embodiment shown in Figure 1 for applying the polymeric release agent 22 to the surface of elastomer layer 2, two release agent delivery rolls 17 and 19 rotatably mounted in the direction indicated are provided to transport release agent 22 from the sump 20 to the elastomer surface. As illustrated in Figure 1, roll 17 is partly immersed in the sump 20 and transports on its surface release agent from the sump to the delivery roll 19. By using a metering blade 24 a layer of polymeric release fluid can be applied initially to delivery roll 19 and subsequently to elastomer layer 2 in controlled thickness ranging from submicrometer thickness to thickness of several microns of release fluid. Thus, by metering device 24, about 0.1 to 2 microns or greater thicknesses of release fluid can be applied to the surface of elastomer layer 2. In Figure 1, a layer of the grafted ceramer (not shown) may overcoat layer 18 of pressure roll 8, layer 2 of fuser roll 1, the surface of donor roll 19, or all three rolls. In embodiments, the layer of the grafted ceramer directly overcoats the substrate or core of the roll without one or more intermediate layers. The fuser member may be for example a roll, belt, flat surface or other suitable shape used in the fixing of thermoplastic toner images to a suitable substrate and it may be in the form of a fuser member, a pressure member or a release agent donor member, and preferably is in the form of a cylindrical roll.

During preparation of the grafted ceramer, the following reactions are believed to occur. An amine coupler having at least one pendant silane group dehydrohalogenates the haloelastomer, resulting in the elimination of a hydrohalogen acid such as hydrofluoric acid and the generation of unsaturated carbon to carbon double bonds on the haloelastomer. The amine coupler adds to one of the carbon atoms of the carbon to carbon double bonds, thereby forming a nitrogen to carbon bond. A hydrolyzable silane compound such as tetraethoxyorthosilicate is added, which undergoes hydrolysis, and the hydrolyzed silane compound reacts with the pendant silane groups of the amine coupler in for example a condensation type reaction. The pendant functional groups of the amine coupler act as initiation sites for the silica network and the silica network grows by the coupling of additional silane compounds to the network via silicon-oxygen bonds by for example condensation type reactions. A functionally terminated polyorganosiloxane is added to the solution comprised of the haloelastomer and silica, with such addition preferably occurring after the initiation of the formation of the intertwining polymeric strands of the haloelastomer and silica. Depending on the nature of its terminal functionality, the polyorganosiloxane can attach to one or more of the following: unsaturation sites on the haloelastomer, i.e., the carbon to carbon double bonds, by, for example, a free radical polymerization route; the silica polymeric strands via a silicon to oxygen covalent bond by for example a condensation type reaction; or the pendant functional groups of the amine coupler by for example a silicon to oxygen covalent bond involving for instance a condensation type reaction. In embodiments, to facilitate condensation reactions to promote the growth of the various networks, all the functional groups (e.g., siloxy) of the amine coupler, silane compound, and polyorganosiloxane undergo hydrolysis. In embodiments where the polyorganosiloxane has a terminal functionality of an alkene or alkyne, the polyorganosiloxane attaches to the unsaturation sites on the haloelastomer. In embodiments where the terminal functionality is an alkoxy such as ethoxy, the polyorganosiloxane attaches to the silica network and/or the pendant functional groups of the amine coupler. The polyorganosiloxane may polymerize via its functional groups by for example condensation type reactions. The various polymeric strands of the grafted ceramer are integral interpenetrating networks. The term integral as applied to the grafted ceramer refers to one or more of the following: covalent bonding of the haloelastomer and silica networks via a carbon atom of the haloelastomer and the nitrogen atom of the amine coupler, covalent bonding of the polyorganosiloxane with the haloelastomer via carbon to carbon bonds, and covalent bonding of the polyorganosiloxane with the silica network via silicone to oxygen covalent bonds. Since the polyorganosiloxane may bind to the silica network, the grafted ceramer in certain embodiments may contain polymeric strands containing segments of both silica and polyorganosiloxane.

A representative structural formula for the grafted ceramer is as follows: 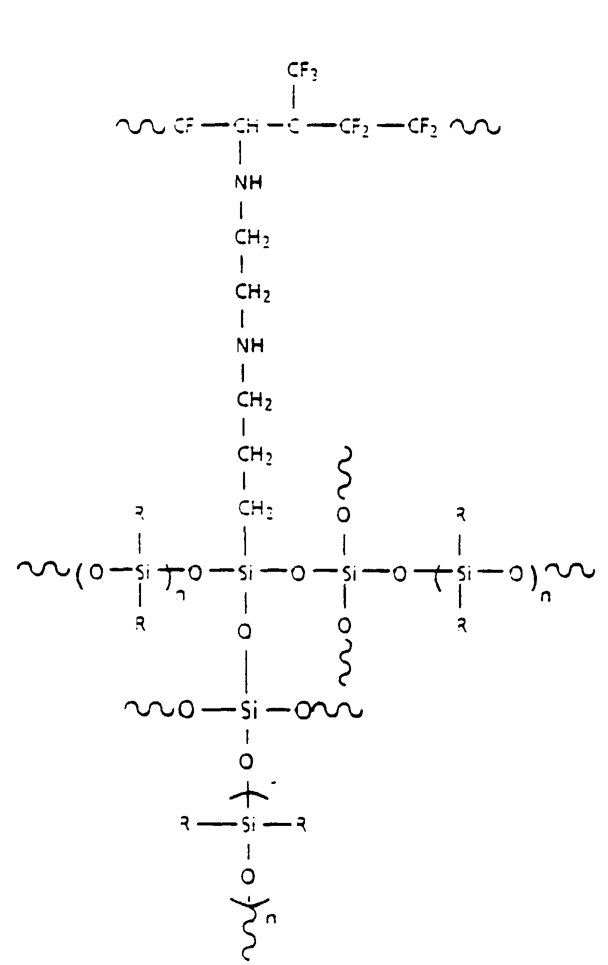 In the above formula, R is the R group of the polyorganosiloxane and may be a substituent as defined herein for the R group of the polyorganosiloxane; n may be as defined herein for the n of the polyorganosiloxane; and the symbol "∼" represents the continuation of the polymeric network.

In embodiments, the grafted ceramer may be prepared by dissolving an effective amount of the haloelastomer, e.g., preferably about 1 to about 35% by weight, more preferably about 5 to about 15% by weight, in an effective amount of a suitable solvent, such as an aliphatic hydrocarbon including for example methyl ethyl ketone, methyl isobutyl ketone and the like at any effective temperature, preferably 25°C. An amine based coupler having one or more pendant functional groups in an effective amount, e.g., preferably about 1 to about 15% by weight, more preferably about 2 to about 10% by weight, of the haloelastomer is added, followed by stirring of the solution for about 15 to about 60 minutes at a temperature of about 45 to about 100° C. An effective amount of a silane compound such as tetraethoxyorthosilicate, e.g., preferably about 1 to about 75% by weight, more preferably about 5 to about 50% by weight, relative to the weight of haloelastomer, is then added and heating is continued at a temperature of about 45 to about 100°C for an additional 20 minutes to about 10 hours. An effective amount of a functionally terminated polyorganosiloxane, e.g., preferably about 5 to about 75% by weight, more preferably about 10 to about 50% by weight, relative to the weight of the haloelastomer, is then added, optionally with a polymerization initiator such as benzoyl peroxide in an effective concentration, e.g., preferably about 0.5 to about 10% by weight, more preferably about 2 to about 5% by weight, relative to the weight of polyorganosiloxane, followed by heating at a temperature of about 45 to about 100° C for an additional 20 minutes to about 10 hours. Any effective sequence of addition of the various components may be used to prepare the grafted ceramer. For example, in embodiments, the haloelastomer may be added to a solvent already containing the amine coupler and/or the silane compound. Also, the polyorganosiloxane may be added at any effective stage, and preferably prior to or during the formation of the networks of the haloelastomer and silica polymeric strands. The preferred reaction time is about 4 hours at about 65°C.

In preferred embodiments, the process to prepare the grafted ceramer may also include other components to facilitate the preparation thereof. For example, a nucleophilic curing agent for the haloelastomer such as Viton Curative No. 50 and diamines such as Diac available from E.I. Dupont deNemours, Inc. may be employed at an effective concentration, preferably about 1 to about 15% by weight, more preferably about 2 to about 10% by weight, relative to the weight of the haloelastomer. Viton Curative No. 50, which incorporates an accelerator (a quaternary phosphonium salt or salts) and a crosslinking agent, such as bisphenol AF in a single curative system, may be added in a 3 to 7 percent solution predissolved to the haloelastomer compound. Also, the basic oxides such as MgO and/or Ca(OH)₂ in effective amounts, preferably about 0.5 to about 10% by weight, more preferably about 1 to about 3% by weight, relative to the weight of the haloelastomer, may be added in particulate form to the solution mixture.

The mixture of the grafted ceramer with the curative and the oxides is then ball milled for about 2 to about 24 hours and preferably, about 5 to about 15 hours to obtain a fine dispersion of the oxides. The curative component can also be added after ball milling in a solution form. The solution of the curative is generally prepared by dissolving Viton Curative No. 50 in methyl ethyl ketone ("MEK") or methyl isobutyl ketone ("MIBK"). The concentration of the solids, i.e., the grafted ceramer with the curative and the oxides, can vary from about 5% to 25% by weight, and preferably from about 10-15% by weight.

Providing an effective layer of the grafted ceramer on the fuser member substrate may be accomplished by any suitable known method such as by spraying, dipping, flow, web or the like a solution of the homogeneous suspension of the grafted ceramer to a level of film of preferably about 10 to about 250 microns in thickness, and more preferably about 15 to about 75 microns in thickness. The thickness of the grafted ceramer overcoating is selected to provide a layer thin enough to prevent a large thermal barrier for fusing and thick enough to allow a reasonable wear life. While molding, extruding and wrapping techniques are alternative means which may be used, it is preferred to spray successive applications of the solvent solution. When the desired thickness of coating is obtained, the coating is cured, by any suitable known method, and thereby bonded to the roll surface. A typical step curing process is heating for about 2 hours at about 93°C followed by about 2 hours at about 149°C followed by about 2 hours at about 177°C followed by about 16 hours at about 208°C. In an alternative procedure, the solvent may be removed by evaporation by known means, the grafted ceramer rinsed with a hydrocarbon solvent such as hexane to remove unwanted reactants, if any, and the grafted ceramer redissolved in the original solvent followed by the addition of Viton Curative No. 50 and the subsequent formation of the outer layer.

A fuser member can be fabricated by depositing a thin layer of the grafted ceramer on a substrate. A fuser member also can be fabricated by coating a thin layer of the grafted ceramer on a substrate having an elastomeric coating. In embodiments, a fuser member can be fabricated with an optional adhesive layer between the grafted ceramer and the substrate. Where there is an optional elastomer coating on the substrate, it is understood that the adhesive layer is intermediate between the grafted ceramer and the elastomer coating of the substrate. Any suitable adhesive may be employed in an effective amount where the adhesive layer preferably is from about 2.5 to about 76 microns thick, and more preferably from about 25 to about 51 microns thick. Examples of adhesives include: Thixon 403/404 available from Morton International of Ohio; a silane type compound such as Union Carbide A-1100; epoxy resins available for example from Dow Chemical Company such as Dow Tactix 740, Dow Tactix 741, and Dow Tactix 742, and the like, optionally with a crosslinker or curative such as Dow H41 available from the Dow Chemical Company. Any suitable material may be employed for the elastomeric coating including the haloelastomers described herein, especially the fluoroelastomers; silicones; a terpolymer elastomer made from ethylene-propylene diene monomer ("EPDM"); and the like.

The haloelastomer may be any suitable halogen containing elastomer such as a chloroelastomer, a bromoelastomer, or the like, mixtures thereof, and preferably is a fluoroelastomer. The haloelastomer may be present in any effective amount in the grafted ceramer, and preferably is present in an amount of about 99 to 25% by weight, and more preferably about 95 to 50% by weight. Fluoroelastomer examples include those described in detail in US-A-4,257,699, US-A-5,017,432 and US-A-5,061,965. As described therein these fluoroelastomers, particularly from the class of copolymers and terpolymers of vinylidenefluoride hexafluoropropylene and tetrafluoroethylene, are known commercially under various designations as Viton A, Viton E, Viton E60C, Viton E430, Viton 910, Viton GH and Viton GF. The Viton designation is a Trademark of E.I. Dupont deNemours, Inc. Other commercially available materials include Fluorel 2170, Fluorel 2174, Fluorel 2176, Fluorel 2177 and Fluorel LVS 76, Fluorel being a Trademark of 3M Company. Additional commercially available materials include Aflas a poly(propylene-tetrafluoroethylene), Fluorel II (Ll1900) a poly(propylene-tetrafluoroethylene-vinylidenefluoride) both also available from 3M Company as well as the Tecnoflons identified as FOR-60KIR, FOR-LHF, NM, FOR-THF, FOR-TFS, TH, TN505 available from Montedison Specialty Chemical Co. Typically, these fluoroelastomers are cured with a nucleophilic addition curing system, such as a bisphenol crosslinking agent with an organophosphonium salt accelerator as described in further detail in the above referenced US-A-4,257,699 and in US-A-5,017,432. In a particularly preferred embodiment, the fluoroelastomer is one having a relatively low quantity of vinylidenefluoride, such as in Viton GF, available from E.I. Dupont deNemours, Inc. The Viton GF has 35 mole percent vinylidenefluoride, 34 percent hexafluoropropylene and 29 mole percent tetrafluoroethylene with 2 percent cure site monomer. It is generally cured with a conventional aliphatic peroxide curing agent.

The curing agent for the haloelastomer crosslinks the haloelastomer chains by creating for example carbon-oxygen-carbon crosslinking where the curing agent is for example a bisphenol type compound such as Viton Curative No. 50. The networks of haloelastomer, polyorganosiloxane and silica are formed in the solution and the crosslinking action of the curing agent does not appear to interfere with the formation of the haloelastomer, polyorganosiloxane and silica networks.

The amine coupler is selected from the group of strong nucleophilic agents such as peroxides, hydrides, bases, amines, and the like. The preferred agents are selected from the group consisting of primary, secondary and tertiary, aliphatic and aromatic amines, where the aliphatic and aromatic groups have from 2 to 15 carbon atoms. The coupler is selected from the groups which have multifunctionality, one of which is capable of dehydrohalogenation of the haloelastomer thereby creating unsaturation sites followed by an addition reaction. This would result in a product which will have pendant coupler chains. The other functionalities on the coupler are desired to undergo further reactions with the silane compound such as tetraethoxyorthosilicate and functionally terminated polyorganosiloxanes. The examples of nucleophilic functionality include amines, peroxides, hydrides, and the like. Functionalities which would undergo reactions with the silane compound such as tetraethoxyorthosilicate are siloxy, hydride, halogen, hydroxy, and the like. Functionalities which would undergo reaction with the polyorganosiloxanes for grafted ceramers could be alkene, alkyne, siloxy, hydride, halogen, hydroxy, and the like. The amine coupler includes aliphatic and aromatic diamines and triamines having from 2 to 15 carbon atoms where the aromatic groups may be benzene, toluene, naphthalene or anthracene, and the like. It is generally preferred for the aromatic diamines and triamines that the aromatic group be substituted in the ortho, meta and para positions. Typical substituents include lower alkylamino groups such as ethylamino, propylamino and butylamino with propylamino being preferred. Following are examples of commercially available couplers which can be used: N-(2-aminoethyl-3-aminopropyl)-trimethoxysilane available as A0700 from Huls America Inc.; 3-(N-styrylmethyl-2-aminoethylamino)propyltrimethoxysilane hydrochloride available as S-1590 from Huls America Inc.; and (aminoethylaminomethyl)phenylethyltrimethoxysilane available as A0698 from Huls America Inc.

Preferred examples of the polyorganosiloxane having functionality according to the present invention are of the formula: 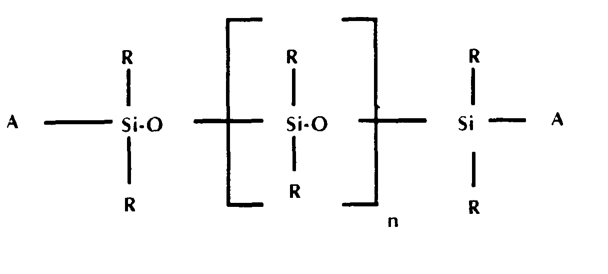 where R independently is an alkyl having for example from 1 to 24 carbon atoms, arc preferably from 1 to 12 carbon atoms; alkenyl having for example from 2 to 24 carbon atoms, and preferably from 1 to 12 carbon atoms; or aryl having for example from 6 to 24 carbon atoms, and preferably from 6 to 18 carbon atoms, wherein the aryl group is optionally substituted with an amino, hydroxy, mercapto or an alkyl having for example from 1 to 24 carbon atoms, and preferably from 1 to 12 carbon atoms, or alkenyl group having from 2 to 24 carbon atoms, and preferably from 2 to 12 carbon atoms. In preferred embodiments, R is independently selected from methyl, ethyl, and phenyl. The functional group A may be an alkene or alkyne group having for example from 2 to 8 carbon atoms, preferably from 2 to 4 carbon atoms, optionally substituted with an alkyl having for example from 1 to 24 carbon atoms, and preferably from 1 to 12 carbon atoms, or aryl group having for example from 6 to 24 carbon atoms, and preferably from 6 to 18 carbon atoms. Functional group A can also be mono-, di-, or trialkoxysilane having 1 to 10, preferably 1 to 6, carbon atoms in each alkoxy group, hydroxy, or halogen. Preferred alkoxy groups include methoxy, ethoxy, and the like. Preferred halogens include chlorine, bromine and fluorine. In the above formula, n represents the number of segments and may be for example 2 to 350, and preferably from about 5 to about 100. In the above formula, typical R groups include methyl, ethyl, propyl, octyl, vinyl, allylic crotnyl, phenyl, naphthyl and phenanthryl and typical substituted aryl groups are substituted in the ortho, meta and para positions with lower alkyl groups having less than 15 carbon atoms, and preferably from 1 to 10 carbon atoms. In a preferred embodiment, n is between 60 and 80. Typical alkene and alkenyl functional groups include vinyl, acrylic, crotonic and acetenyl which may typically be substituted with methyl, propyl, butyl, benzyl, and tolyl groups, and the like.

The polyorganosiloxane in the grafted ceramer differs from the formula disclosed herein for the functionally terminated polyorganosiloxane reactant, since the functional ends may have undergone reactions with the silica network, haloelastomer, amine coupler, or other polyorganosiloxane. For example, functional group A if it is, for instance, trialkoxysilane, may undergo hydrolysis followed by condensation reactions with the pendant functional groups of the amine coupler which may be already attached to the haloelastomer or the silica network. In embodiments, the first step is that all the siloxy groups undergo hydrolysis. The second step is the condensation reaction giving rise to the Si-O-Si linkage. For this reaction, one may optionally employ a catalyst which can be an acid like acetic, hydrochloric, sulfuric, and the like. The chemistry would be similar if functional group A is hydroxy or a halogen. If functional group A is alkyne or alkene, then an initiator such as benzoyl peroxide is optionally employed and, in embodiments, one of the pendant groups on the coupler typically is also an alkene or alkyne.

The source of the silica network may be any suitable silane type compound such as that having the formula Si(A)₄. In this formula, A may be for example OR, where R is an alkyl having 1 to 24 carbon atoms such as methyl, ethyl, propyl, butyl, pentyl, hexyl, heptyl, octyl, and the like; a halogen; hydroxy; or hydride. The silica network may be present in any effective amount, preferably from about 1 to about 50% by weight, and more preferably from about 5 to about 25% by weight, based on the weight of the grafted ceramer.

Adjuvants and fillers may be incorporated in the elastomer in accordance with the present invention providing for example they do not detrimentally affect the grafted ceramers of the present invention. Such fillers normally encountered in the compounding of elastomers include effective amounts of for example of about 1% to about 50% by weight of coloring agents, reinforcing fillers, crosslinking agents, processing aids, accelerators and polymerization initiators, and the like.

The substrate for the fusing member according to the present invention may be of any suitable material and dimensions. For a fuser roll, the substrate may have for example an outside diameter ("OD") of about 76mm, a length of about 394mm, and a wall thickness of about 6.4mm. For a pressure roll, the substrate may have for example an OD of about 76mm, a length of about 394mm, and a wall thickness of about 6.4mm. For a donor roll, the substrate may have for example an OD of about 38mm, a length of about 394mm, and a wall thickness of about 3.2mm Typically, it takes the form of a cylindrical tube of aluminum, steel or certain plastic materials chosen to maintain rigidity, structural integrity, as well as being capable of having the grafted ceramer or intermediate layer such as a silicone elastomer coated thereon and adhered firmly thereto. Typically, the fuser members may be made by injection, compression or transfer molding, or they may be extruded. In a typical procedure the core which may be a steel cylinder is degreased with a solvent and cleaned with an abrasive cleaner prior to being primed with a primer such as Dow Corning 1200 which may be sprayed, brushed or dipped followed by air drying under ambient conditions for thirty minutes and then baked at 150° C for 30 minutes. The intermediate layer may be comprised of any suitable material having the proper thermal and mechanical properties such as silicone elastomers, haloelastomers disclosed herein such as fluoroelastomers, ethylene propylene diene monomer, perfluoroalkylether and the like. Preferred intermediate layer materials include Viton GF, Tecnoflons, Fluorel I and II, Aflas, silicones, butyl nitrile rubbers. In embodiments, the intermediate layer material exhibits the durameter rating of: about 30 to 100 and preferably about 40 to 70 Shore A. The intermediate layer may be applied according to conventional techniques such as injection molding and casting after which it is cured for up to about 15 minutes and at about 120 to 180°C to provide a complete cure without a significant post cure operation. This curing operation should be substantially complete to prevent debonding of the one or more intermediate layers from the core when it is removed from the mold. Thereafter the surface of the intermediate layer, preferably silicone elastomer, is sanded to remove the mold release agent and it is wiped clean with a solvent such as isopropyl alcohol to remove all debris.

The invention will now be described in detail with respect to specific preferred embodiments thereof, it being understood that these examples are intended to be illustrative only and the invention is not intended to be limited to the materials, conditions or process parameters recited herein. All percentages and parts are by weight unless otherwise indicated. In the following examples, room temperature refers to a temperature at about 25°C.

### EXAMPLE

An aluminum cylindrical sleeve (76mm outside diameter x 394mm length x 6.4mm wall thickness) was abraded with sand paper, followed by degreasing, scrubbing with an abrasive cleaner and thoroughly washing with water. A primer Dow Corning primer DC1200 was applied to a thickness of 5 to 7.5 micrometer, air dried at ambient conditions for 30 minutes and baked at 150° C for 30 minutes. Subsequently, the primed core was provided with an intermediate layer of a liquid injection molded fluoroelastomer by molding Ausimont USA, Inc. Tecnoflon 421 to the primed core to a thickness of about 6.4mm. Following removal of the roll from the mold, the mold release material (a silicon type compound) was sanded off and the roll was cleaned with isopropyl alcohol. A grafted ceramer composition was prepared by dissolving 250 g of Viton GF in 2.5 liters of methylethyl ketone (MEK) by stirring at room temperature. This is accomplished by using a four liter plastic bottle and a moving base shaker. It takes approximately one hour to two hours to accomplish the dissolution depending upon the speed of the shaker. The above solution is then transferred to a four liter Erlenmeyer flask and 25 mil of the amine dehydrofluorinating agent, 3-(N-strylmethyl-2-aminoethylamino) propyltrimethoxysilane hydrochloride (5-1590, available from Huls America Inc.) was added. The contents of the flask were then stirred using a mechanical stirrer while maintaining the temperature between 55°C and 60°C. After stirring for 30 minutes, 50 grams of ethoxy terminated polysiloxane (PS-393) and 50 grams of tetraethoxyorthosilicate both available from Huls America Inc. were added and stirring continued for another ten minutes. About 25 grams of acetic acid was then added. The stirring was continued while heating the contents of the flask at around 55°C for another 4 hours. During this time the color of the solution turned light brown which then cooled to room temperature. To this solution was then added 5 grams of magnesium oxide, 2.5 grams of calcium hydroxide and 12.5 grams of curative VC-50 available from Dow Chemical Co. The above mixture was then ball jarred with ceramic balls as media for 17 hours. The mixture was diluted to 5 liters with methylethyl ketone. A portion of this dispersion (less than 2 liters) was spray coated onto a 254 × 356mm steel substrate (76 microns thick). The dry film was then removed by peeling from the substrate and was cured by the following heating procedure: 2 hours at 93°C, 2 hours at 149°C, 2 hours at 177°C, and 16 hours at 208°C. The thickness of the cured film as determined by permoscope was found to be 330 microns. The mechanical properties as determined by Instron Model 1123 (standard test protocol ASTM 412) showed the toughness to be 1850 Ib-in/in³. Next, a portion of the above dispersion (less than 1 liter) was sprayed to a dry thickness of 51 microns onto the aluminum sleeve having the Technoflon 421 intermediate layer. The resulting roll was then cured by the following heating profile: 2 hours at 93°C, 2 hours at 149°C, 2 hours at 177°C, and thereafter heating for 16 hours at 208°C. This roll was then cooled to room temperature.

The prepared roll containing the grafted ceramer overcoat was installed in a Xerox Corporation 5090 imaging apparatus as a pressure roll and 2.3 million copies were made where the grafted ceramer overcoated pressure roll assisted in fusing the toned images onto the paper. No physical or chemical degradation of the pressure roll surfaces, toner contamination, or paper stripping problems were visually observed. The test was suspended without failure after 2.3 million copies. The grafted ceramer overcoated roll looked and performed like new even after 2.3 million copies. In contrast, the standard pressure roll (sleeved design having a metal core, an intermediate layer of a terpolymer elastomer made from ethylene-propylene diene monomer having a thickness of about 6.4mm, and a top layer of polytetrafluoroethylene having a thickness of about 0.80mm) when installed in the Xerox Corporation 5090 imaging apparatus showed edge wear at the 279mm paper path, showed toner contamination, and have shown in some instances physical degradation because of the heat and pressure starting at about 300,000 copies.

Toughness of a material is generally directly related to its wear resistance, i.e., as material toughness increases, abradability decreases. The examples evidence the superior toughness and wear resistance of fuser components having a grafted ceramer layer overcoat.

Our copending European Patent Application 94 302 355,6, filed concurrently herewith and published as EP-A-0 619 532 relates to fusing components including a layer comprising interpenetrating networks of haloelastomer and silica.

## Claims

1. A fuser member comprising a supporting substrate and a layer comprising integral interpenetrating networks of haloelastomer, silica, and polyorganosiloxane.

2. The fuser member of claim 1, wherein the interpenetrating networks are substantially uniform.

3. The fuser member of claim 1 or claim 2, wherein the haloelastomer is a fluoroelastomer.

4. The fuser member of claim 3, wherein the fluoroelastomer is selected from the group consisting of poly(vinylidene fluoride-hexafluoro-propylene) and poly(vinylidene fluoridehexafluoropropylene-tetrafluoroethylene).

5. The fuser member of any one of claims 1 to 4, wherein the polyorganosiloxane is derived from a compound having the formula: 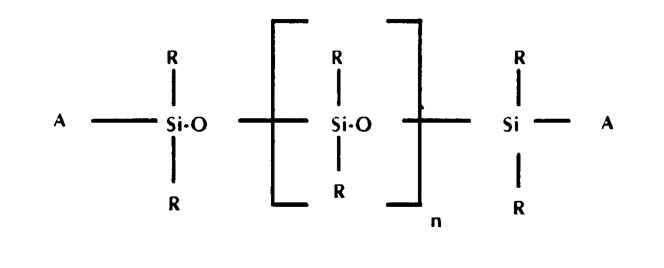 where R independently is an alkyl, alkenyl or aryl, wherein the aryl is optionally substituted with an amino, hydroxy, mercapto or alkyl or alkenyl group; the functional group A is a mono-, di- or trialkoxysilane, hydroxy, halogen, an alkene or alkyne wherein the alkene and alkyne of the functional group A are optionally substituted with an alkyl or aryl; and n represents the number of segments.

6. The fuser member of claim 5, wherein R is an alkyl having from 1 to 24 carbon atoms, alkenyl having from 2 to 24 carbon atoms or aryl having from 6 to 24 carbon atoms, wherein the aryl is optionally substituted with an amino, hydroxy, mercapto or alkyl having from 1 to 24 carbon atoms, or alkenyl group having from 2 to 24 carbon atoms; the functional group A is a mono-, di- or trialkoxysilane having from 1 to 10 carbon atoms in each alkoxy group, hydroxy, halogen, an alkene having from 2 to 8 carbon atoms, or alkyne having from 2 to 8 carbon atoms, wherein the alkene and alkyne of functional group A are optionally substituted with an alkyl having from 1 to 24 carbon atoms or aryl having from 6 to 24 carbon atoms; and n is from 2 to 350.

7. A process for preparing a fuser member comprising: forming on a substrate a layer comprising integral interpenetrating networks of haloelastomer, silica, and polyorganosiloxane, wherein the networks are formed by the steps comprising in any effective sequence dehydrohalogenating the haloelastomer with an amine coupler having one or more functional groups and coupling the amine coupler thereto, hydrolyzing a silane compound, coupling the amine coupler to the hydrolyzed silane compound, coupling a functionally terminated polyorganosiloxane to one or more of the amine coupler, the silica network, and the haloelastomer.

8. The process of claim 7, wherein the amine coupler is a primary, secondary or tertiary aliphatic or aromatic amine where the aliphatic and aromatic groups have from 2 to 15 carbon atoms, or aliphatic or aromatic diamines or triamines having from 2 to 15 carbon atoms.

9. The process of claim 7 or claim 8, wherein the silane compound is of the formula Si(A)₄, where A is a halogen; hydroxy; hydride; or OR, where R is an alkyl having from 1 to 24 carbon atoms.

10. A composition comprising substantially uniform integral interpenetrating networks of haloelastomer, silica, and polyorganosiloxane.

## Patentansprüche

1. Fixierelement umfassend ein Trägermaterial und eine Schicht, die integrale, sich gegenseitig durchdringende Netzwerke aus Halogenelastomer, Siliziumoxid und Polyorganosiloxan umfaßt.

2. Fixierelement von Anspruch 1, bei dem die sich gegenseitig durchdringenden Netzwerke im wesentlichen gleichförmig sind.

3. Fixierelement von Anspruch 1 oder Anspruch 2, bei dem das Halogenelastomer ein Fluorelastomer ist.

4. Fixierelement von Anspruch 3, bei dem das Fluorelastomer aus der Gruppe ausgewählt ist, die aus Poly(vinylidenfluorid-hexafluorpropylen) und Poly(vinylidenfluorid-hexafluorpropylen-tetrafluorethylen) besteht.

5. Fixierelement eines Anspruchs 1 bis 4, bei dem das Polyorganosiloxan von einer Verbindung mit der Formel 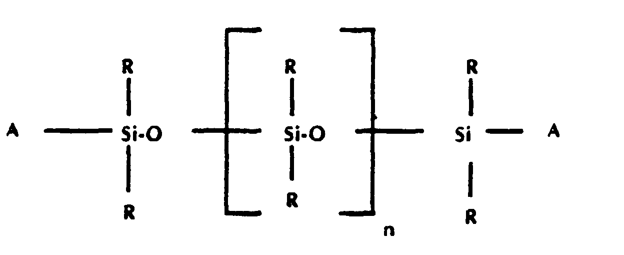 abgeleitet ist, worin R unabhängig Alkyl, Alkenyl oder Aryl ist, wobei das Aryl gegebenenfalls mit einer Amino-, Hydroxy-, Mercapto- oder Alkyl- oder Alkenylgruppe substituiert ist, die funktionelle Gruppe A ein Mono-, Di- oder Trialkoxysilan, Hydroxy, Halogen, ein Alken oder Alkin ist, wobei das Alken und Alkin der funktionellen Gruppe A gegebenenfalls mit Alkyl oder Aryl substituiert ist, und n die Zahl der Abschnitte darstellt.

6. Fixierelement von Anspruch 5, wobei R Alkyl mit 1 bis 24 Kohlenstoffatomen, Alkenyl mit 2 bis 24 Kohlenstoffatomen oder Aryl mit 6 bis 24 Kohlenstoffatomen ist, wobei das Aryl gegebenenfalls mit einer Amino-, Hydroxy-, Mercapto- oder Alkyl- mit 1 bis 24 Kohlenstoffatomen oder Alkenylgruppe mit 2 bis 24 Kohlenstoffatomen substituiert ist, die funktionelle Gruppe A ein Mono-, Di- oder Trialkoxysilan mit 1 bis 10 Kohlenstoffatomen in jeder Alkoxygruppe, Hydroxy oder Halogen, ein Alken mit 2 bis 8 Kohlenstoffatomen oder Alkin mit 2 bis 8 Kohlenstoffatomen ist, wobei das Alken und Alkin der funktionellen Gruppe A gegebenenfalls mit Alkyl mit 1 bis 24 Kohlenstoffatomen oder Aryl mit 6 bis 24 Kohlenstoffatomen substituiert ist und n von 2 bis 350 ist.

7. Verfahren zum Herstellen eines Fixierelements, umfassend: das Bilden einer Schicht, die integrale, sich gegenseitig durchdringende Netzwerke aus Halogenelastomer, Siliziumoxid und Polyorganosiloxan umfaßt, auf einem Substrat, wobei die Netzwerke durch die Schritte gebildet werden, die das Dehydrohalogenieren des Halogenelastomers mit einem Aminkuppler mit einer oder mehr funktionellen Gruppen und das Kuppeln des Aminkupplers daran, das Hydrolysieren einer Silanverbindung, das Kuppeln des Aminkupplers an die hydrolysierte Silanverbindung, das Kuppeln eines Polyorganosiloxans mit funktionellen Endgruppen an eines oder mehr aus Aminkuppler, Siliziumoxidnetzwerk und Halogenelastomer in jeder wirkungsvollen Reihenfolge umfassen.

8. Verfahren von Anspruch 7, wobei derAminkuppler ein primäres, sekundäres oder tertiäres aliphatisches oder aromatisches Amin ist, wobei die aliphatischen und aromatischen Gruppen 2 bis 15 Kohlenstoffatome aufweisen oder die aliphatischen oder aromatischen Diamine oder Triamine 2 bis 15 Kohlenstoffatome aufweisen.

9. Verfahren von Anspruch 7 oder Anspruch 8, wobei die Silanverbindung von der Formel Si(A)₄ ist, wobei A ein Halogen, Hydroxy, Hydrid oder OR ist, wobei R Alkyl mit 1 bis 24 Kohlenstoffatomen ist.

10. Zusammensetzung umfassend im wesentlichen gleichförmige, integrale, sich gegenseitig durchdringende Netzwerke aus Halogenelastomer, Siliziumoxid und Polyorganosiloxan.

## Revendications

1. Elément fixateur comprenant un substrat de support et une couche comprenant des réseaux à interpénétration complète constitués d'un halogénoélastomère, de silice et d'un polyorganosiloxane.

2. Elément fixateur selon la revendication 1, dans lequel les réseaux à interpénétrations sont sensiblement uniformes.

3. Elément fixateur selon la revendication 1 ou selon la revendication 2, dans lequel l'halogénoélastomère est un fluoroélastomère.

4. Elément fixateur selon la revendication 3, dans lequel le fluoroélastomère est choisi dans le groupe constitué de poly(vinylidènefluor-hexafluoro- propylène) et de poly(vinylidènefluor- hexafluoropropylène-tétrafluoroéthylène).

5. Elément fixateur selon l'une quelconque des revendications 1 à 4, dans lequel le polyorganosiloxane est obtenu à partir d'un composé ayant la formule : 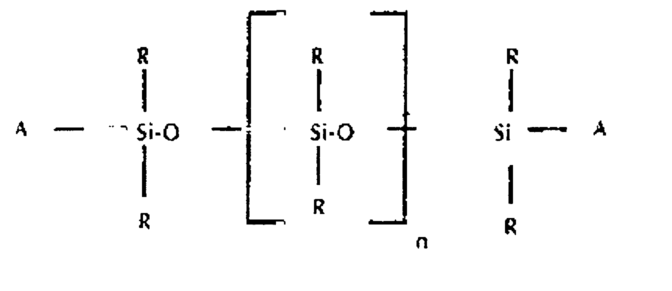 dans laquelle R est indépendamment un groupe alkyle, un groupe alcényle ou un groupe aryle, dans lequel le groupe aryle est facultativement substitué par un groupe amino, un groupe hydroxyle, un groupe mercapto ou par un groupe alkyle ou un groupe alcényle ; le groupe fonctionnel A est un mono, un di ou un trialkoxysilane, un groupe hydroxyle, un halogène, un groupe alcène ou un groupe alcyne, dans lequel le groupe alcène et le groupe alcyne du groupe fonctionnel A sont facultativement substitués par un groupe alkyle ou par un groupe aryle ; et n représente le nombre de segments.

6. Elément fixateur selon la revendication 5, dans lequel R est un groupe alkyle comportant de 1 à 24 atomes de carbone, un groupe alcényle comportant de 2 à 24 atomes de carbone ou un groupe aryle comportant de 6 à 24 atomes de carbone, dans lequel le groupe aryle est facultativement substitué par un groupe amino, un groupe hydroxyle, un groupe mercapto ou un groupe alkyle comportant de 1 à 24 atomes de carbone, ou un groupe alcényle comportant de 2 à 24 atomes de carbone ; le groupe fonctionnel A est un mono, un di ou un trialkoxysilane comportant de 1 à 10 atomes de carbone dans chaque groupe alcoxyle, le groupe hydroxyle, l'halogène et le groupe alcène comportant de 2 à 8 atomes de carbone, ou le groupe alcyne comportant de 2 à 8 atomes de carbone, dans lequel le groupe alcène et le groupe alcyne du groupe fonctionnel A sont facultativement substitués par un groupe alkyle comportant de 1 à 24 atomes de carbone ou par un groupe aryle comportant de 6 à 24 atomes de carbone ; et n est un nombre compris entre 2 et 350.

7. Procédé de préparation d'un élément fixateur comprenant les étapes consistant à : former sur un substrat une couche comprenant des réseaux à interpénétration complète de l'halogénoélastomère, de la silice et du polyorganosiloxane, dans lequel les réseaux sont formés par les étapes consistant à, dans tout ordre efficace, déhydrohalogéner l'halogénoélastomère avec un coupleur amine comportant un ou plusieurs groupes fonctionnels et coupler le coupleur amine à celui-ci, hydrolyser un composé silane, coupler le coupleur amine au composé silane hydrolysé, coupler un polyorganosiloxane à terminaison fonctionnelle à un ou plusieurs du coupleur amine, du réseau de silice et de l'halogénoélastomère.

8. Procédé selon la revendication 7, dans lequel le coupleur amine est une amine aliphatique ou aromatique primaire, secondaire ou tertiaire, dans laquelle les groupes aliphatiques et aromatiques comportent de 2 à 15 atomes de carbone ou les diamines ou les triamines aliphatiques ou aromatiques comportent de de 2 à 15 atomes de carbone.

9. Procédé selon la revendication 7 ou selon la revendication 8,dans lequel le composé silane est de la formule Si(A)₄, dans laquelle A est un halogène ; un groupe hydroxyle ; un hydrure ; ou OR, dans lequel R est un groupe alkyle comportant de 1 à 24 atomes de carbone.

10. Une composition comprenant des réseaux à interpénétration complète sensiblement uniformes constitués d'un halogénoélastomère, de silice et d'un polyorganosiloxane.
